# EUROPEAN PATENT SPECIFICATION

(11) **EP 1 736 491 B1**
(45) Date of publication and mention of the grant of the patent: **21.12.2011**
(21) Application number: 06113675.0
(22) Date of filing: 09.05.2006
(51) Int. Cl.: C08G 18/10, C08G 18/50, C08G 18/69, C09J 175/14, C08G 18/76, C08L 97/02

(54) **Lignocellulosic composites having improved resistance to heat, adhesive systems, and process**
Lignozelluloseverbundwerkstoffe, die eine verbesserte Hitzebeständigkeit aufweisen, Klebstoffsysteme und Verfahren
Composites lignocellulosiques ayant une résistance à la chaleur améliorée, systèmes d'adhésifs et procédé

(30) Priority: 20.06.2005 US 692107 P
(43) Date of publication of application: 27.12.2006
(73) Proprietor: HUNTSMAN INTERNATIONAL LLC, Salt Lake City, Utah 84108 (US)
(72) Inventor: Nand Singh, Sachchida, Moorestown, NJ 08057 (US); Moriarty, Christopher J., The Woodlands, TX 77382 (US); Gillis, Herbert R., Laughlin, NV 89029 (US); Parker, Anthony, Newton, PA 18940 (US)
(74) Representative: Swinnen, Anne-Marie

(56) References cited:
- EP-A2- 0 764 707
- WO-A1-00/44803
- US-A1- 2005 032 972
- US-A1- 2005 087 290

## Description

### Technical Field

The present invention is directed towards lignocellulosic composites, adhesive systems and process for making them, and structures produced therefrom.

### Background of the Invention

It is known in the art that lignocellulosic composites may be prepared using polyisocyanate-based adhesives. Polyisocyanate-based adhesives have a number of technical advantages over other types of adhesives used in the art. One advantage is that polyisocyanate-based adhesives are able to cure and form a satisfactory adhesive bond without the application of external heat. This is known in the art as "cold curing". Cold curing is often used in the manufacture of engineered lumber composites, such as I-beams and laminated veneer lumber ("LVL"), because such engineered lumber composites are often quite thick and the application of external heat is often difficult or impossible because the rate of heat transfer is too slow for an economically practical curing process. Another advantage is that polyisocyanate-based adhesives work effectively on relatively moist lignocellulosic substrates, even "green" wood; whereas, many other kinds of wood adhesives do not. This feature of polyisocyanate-based adhesives reduces or eliminates the need for pre-drying of the substrate. Yet another advantage of polyisocyanate-based adhesives is the quality of the adhesive bond itself. Lignocellulosic composites prepared using polyisocyanates generally have improved resistance to moisture attack, and provide higher bond strength per unit weight of adhesive applied onto the surface of the substrate. Despite the technical advantages of polyisocyanate-based adhesives, the industry often perceives polyisocyanate-based adhesives as being more expensive than other types of wood adhesives, such as phenolics (phenol formaldehyde resins) and aminoplasts, especially urea-formaldehyde resins. It is also true that many of the isocyanate-based adhesives of the prior art have great difficulty meeting requirements of structural durability tests such as ASTM D-2559-00 in USA, CSA 0112.9-04 in Canada, etc. Such tests are required for passing key building code specifications, such as the requirements for resistance to shear compression loading and resistance to de-lamination during accelerated exposure, according to the procedures described in ASTM Specification D-2559-00, Sections 14 and 15, respectively. The requirements of this ASTM procedure are particularly demanding for polyisocyanate-based wood adhesives in engineered lumber applications. Many isocyanate-based adhesives of the prior art have difficulties with thermal aging at elevated temperatures. For example, when adhesive bonded wood samples prepared from these prior art adhesives are exposed to temperatures in the vicinity of 200°C (400°F) to about 232°C (450°F), they lose their bond strength so rapidly that the glue line becomes weaker than the wood substrate itself. This may be considered unacceptable in some situations. Thus, there is a strong need in the industry for isocyanate-based wood adhesives that can better resist high temperature exposure. Ideally, the glue line should not lose its bond strength more rapidly than the substrate materials (the wood adherends) lose their internal cohesive strength when exposed to heat. The glue line should remain at least as strong, preferably stronger, than the wood substrate itself.

There have been some reports in the prior art of isocyanate-based adhesives that exhibit improved heat resistance in the cured glue line. These include certain isocyanate terminated prepolymers formed from various polybutadiene based polyol compositions. Some relevant references to the technology background include U.S. Patent Nos. 6,262,217, 5,646,229, 5,064,896, and 4,295,909. However, the specific adhesive formulations actually disclosed in these references do not meet the demanding requirements for rapid cure of the adhesive under ambient temperature conditions ("cold-cure") and single-component application.

It is also known in the prior art to use surface treatments such as primers and adhesion promoters to enhance the performance of an adhesive. Such techniques are rarely used in the manufacture of composite lignocellulosic articles because of the cost of the primer and the added complexity of the process. Many adhesion promoters that are widely used in the production of non-lignocellulosic composites are relatively less effective when used on lignocellulosic substrates. It would be highly preferred to eliminate, or at least minimize, the use of primers or other surface treatments.

WO 00/44803 and US 2005/032972 both describe adhesive compositions for preparing lignocellulosic composites containing the reaction product of a polyisocyanate, a tertiary-amine-containing polyol and a polyether polyol. However the high temperature bond durability of said adhesives are unsatisfactory.

Thus, there remains a need in the industry for improved isocyanate-based adhesive systems suitable for making high quality bonded lignocellulosic composites that pass all the relevant requirements of ASTM D-2559-00 Section 14 and/or ASTM D-2559-00 Sections 14 and 15. This is particularly true in situations where it is desirable not to use chemical surface pre-treatments. The improved adhesive systems should desirably be simpler to use, more cost effective on an overall process basis, and at least as safe to work with as the polyisocyanate-based wood adhesives currently known in the art for engineered lumber applications. The improved isocyanate-based adhesive systems should also be of sufficient shelf stability to permit storage and transportation, and should be free of formaldehyde emissions. The adhesive should also be free of odor-causing volatile species, such as styrenic or (meth)acrylic monomers.

### Summary of the Invention

The invention provides a one-component polyisocyanate based wood adhesive system that is suitable for preparing lignocellulosic composites that meet all the requirements of ASTM D-2559-00 Section 14 and/or ASTM D-2559-00 Sections 14 and 15, in the absence of any other types of adhesives, wherein the polyisocyanate based wood adhesive system comprises an organic polyisocyanate composition containing free organically bound isocyanate groups; said polyisocyanate composition further comprising, in the form of isocyanate-terminated reaction products (prepolymers), the following ingredients A and B:
A) a tertiary-amine-containing polyahl as described below, preferably an alkanolamine, and
B) a hydrocarbon-backbone polyahl as described below, preferably a hydroxy terminated aliphatic hydrocarbon resin having a number averaged molecular weight of greater than 400.

In the preferred embodiments of the invention, the improved one-component polyisocyanate based wood adhesive is a liquid or a flowable paste at ambient temperatures and, still more preferably, does not require the application of any chemical pre-treatments to the substrate in order to perform effectively.

The invention further provides a process for preparing a bonded article from lignocellulosic substrates preferably using a single adhesive system, the process comprising the steps of:
A) providing at least two lignocellulosic surfaces for bonding;
B) providing, as the single adhesive system, the polyisocyanate based wood adhesive system as defined above;
C) applying said polyisocyanate based wood adhesive system to at least a portion of at least one of the lignocellulosic surfaces for bonding;
D) contacting the lignocellulosic surfaces under conditions suitable for forming an adhesive bond between the lignocellulosic surfaces; and
E) recovering from Step-D an adhesive bonded lignocellulosic article that satisfies all the requirements of Section 14 of ASTM D-2559-00 and/or Sections 14 and 15 of ASTM D-2559-00.

In another embodiment of the invention, there is provided a process for preparing a bonded article from lignocellulosic substrates preferably using a single adhesive system, the process comprising the steps of:
1) providing at least two lignocellulosic surfaces for bonding;
2) providing, as the single adhesive system, the polyisocyanate based wood adhesive system as defined above;
3) applying said polyisocyanate based wood adhesive system to at least a portion of at least one of the lignocellulosic surfaces for bonding;
4) contacting the lignocellulosic surfaces under conditions suitable for forming an adhesive bond between the lignocellulosic surfaces; and
5) recovering from Step-4 an adhesive bonded lignocellulosic article that retains a glue line strength at least equal to the shear strength of the lignocellulosic substrate material after a period of heat aging, such as 1 hour of heat aging at a temperature of 232°C (450°F).

In preferred embodiments of the invention, the isocyanate adhesive is a liquid or a flowable paste and is fully storage stable and usable for greater than 24 hours at 25°C at 1 standard atmosphere of pressure (760 mmHg) under dry conditions, and no pre-mixing is required within 24 hours of the application thereof to the lignocellulosic substrate to achieve the successful production of said bonded lignocellulosic composite.

In still more preferred embodiments, the adhesive is storage stable and usable for greater than 7 days at 25°C at 1 standard atmosphere pressure (760 mmHg) under dry conditions and no pre-mixing of the adhesive is required within 7 days of the application thereof to the lignocellulosic substrate in order to successfully produce an adhesive bonded lignocellulosic article that satisfies all the requirements of ASTM D-2559-00 Section 14 and/or ASTM D-2559-00 Sections 14 and 15.

In a highly preferred embodiment, at least one of the lignocellulosic surfaces for bonding is southern yellow pine (SYP). In a particularly preferred embodiment, all of the lignocellulosic surfaces to be bonded are southern yellow pine (SYP).

In yet another highly preferred embodiment, the organic polyisocyanate-based adhesive composition further comprises as a dispersed phase an organic crystalline or semicrystalline polymeric material. In some highly preferred aspects of this embodiment, the crystalline or semicrystalline phase is derived from a polycaprolactone diol with a molecular weight (number averaged) greater than 30,000. In the most highly preferred aspects of this embodiment, the organic polyisocyanate composition containing the crystalline or semicrystalline organic dispersed phase is in the form of a flowable paste (a spreadable gel-like material) at 25°C, and is preferably applied at least in part to at least one of the substrates to be bonded in the form of a flowable paste.

In another especially preferred embodiment, the curing of the adhesive system is accomplished without the application of heat or of indirect sources of heat such as radiation. The adhesive system, in this especially preferred embodiment, is capable of curing at ambient temperatures (typically about 25°C). Pressure is desirably used to facilitate bonding in this "cold cure" mode. The use of pressure, usually in the form of a press, is desirable in other embodiments of the invention as well, regardless of whether external heating is applied.

### Detailed Description of the Invention

The isocyanate-based adhesive prepolymer formulations disclosed herein are uniquely suited for the production of adhesive bonded lignocellulosic articles, preferably structural laminated wood products, that satisfy all the requirements of ASTM D-2559-00 Section 14 and/or ASTM D-2559-00 Sections 14 and 15. The adhesive laminated wood articles are preferred for exterior (wet use) exposure conditions.

Although particularly well suited to the fabrication of laminated wood articles, the improved adhesives of the invention are suitable for use with a wide range of lignocellulosic materials as substrates. The term "lignocellulosic material" is intended to mean a woody material, including, without limitation, wooden boards, wood veneers, wood fibers, wood strips, wood flakes, wood particles, comminuted agricultural wastes (i.e. rice hulls, baggasse, straw, and the like), other wood based composites, combinations of these, and the like.

The subject matter of this application is related to that of co-pending application U.S. Serial No. 10/976,233.

The adhesive prepolymer according to the invention combines the known advantages of isocyanate adhesives with the capability of passing the requirements of ASTM D-2559-00 Section 14 and/or ASTM D-2559-00 Sections 14 and 15, without the need of using any adhesives (co-adhesives) other than the inventive adhesive system itself. The improved adhesive according to the invention may optionally be used with chemical surface pre-treatments, such as those described in the co-pending application referenced above. However, the use of chemical surface treatments is considerably less preferred, in as much as it adds to the cost and complexity of the overall process. The improved adhesive according to the invention is further characterized by having good storage stability and does not require any pre-mixing (re-mixing) of the one-component adhesive within 24 hours, preferably 7 days or more, prior to the application thereof to the lignocellulosic substrate for bonding. The application of the improved one-component adhesive to the substrate may be performed in any desired manner, including, but not limited to, rolling, doctor blading, spraying, brushing, wiping, ribbon coating, combinations of these methods, and the like. When an optional chemical surface treatment is used in conjunction with the improved adhesive, the surface treatment may be applied prior to the organic polyisocyanate adhesive, or to the surface of the uncured polyisocyanate adhesive after the latter has been applied. Alternatively, the polyisocyanate adhesive and the optional surface treatment may be applied onto the opposing surfaces of an adhesive bond. The polyisocyanate adhesive and the optional surface treatment may be applied by the same or different methods of application. Premixing or pre-reaction of the polyisocyanate adhesive and the optional surface treatment separately from the substrate, followed by subsequent application of the premixture or pre-reaction product to the substrate, is much less desirable and should generally be avoided.

The improved adhesive prepolymer systems according to the invention and the processes disclosed herein offer significant performance improvements by providing for increased heat resistance of the cured adhesive glue line (bond line). In the most preferred embodiments, the adhesives may be used without any chemical pre-treatment of the substrates to be bonded, and will provide for improved retention of the strength of the glue line after heat aging of the bonded article. In a preferred embodiment, the adhesives can provide a cured glue line which is stronger than the substrate material (wood), even after the bonded substrate has been exposed to a period of heat aging, such as temperature of 232°C (450°F) for 1 hour under dry conditions. In another preferred embodiment, the adhesives can provide for a cured glue line which remains stronger than the substrate material even after the bonded substrate has been exposed to a period of heat aging, such as temperature of 232°C (450°F) for 1 hour under humid conditions.

The more preferred organic polyisocyanates according to the invention are storage stable for weeks or months under ambient conditions if protected from ambient moisture. The adhesive composition and processes disclosed herein provide for the production of adhesive bonded lignocellulosic laminated articles that can satisfy all the requirements of ASTM D-2559-00 Section 14 and/or ASTM D-2559-00 Sections 14 and 15, while additionally providing the possibility for the elimination of chemical surface pre-treatments.

In a particularly preferred embodiment, the adhesive formulation consists of just a single organic polyisocyanate composition (a "one component" isocyanate adhesive), and no chemical surface treatment is needed. In this particularly preferred embodiment, the single organic polyisocyanate composition is the sole adhesive used. It is however within the scope of the invention, and, of this particularly preferred embodiment, to use other optional additives, such as fire retardants and/or catalysts, which are known in the art, are not adhesives in themselves at the levels required for their effective use, and are not effective as adhesion promoters for the organic polyisocyanate at the levels required for their effective use. These other optional additives, when used, may be applied directly to the substrate, or applied in combination with the adhesive, or any combination thereof. The other optional additives, when used, may be applied by any known means that do not adversely affect the performance or stability, as defined above, of the adhesive system.

Any substrate that will form a bond to a lignocellulosic substrate through the intermediacy of a polyisocyanate adhesive can be used with the adhesive prepolymer formulations disclosed herein. Preferably, at least two of the substrates to be bonded are lignocellulosic materials, and more preferably, all of the substrates to be bonded are lignocellulosic materials. Non-limiting examples of optional non-lignocellulosic substrates may include, without limitation, cloth, paper, cardboard, concrete, glass, plastic, metal, combinations of these, and the like. A highly preferred subset of lignocellulosic substrates include, without limitation, whole boards, wood strips, and/or wood veneers, especially boards or veneers of a definite pre-determined shape that have been cut or shaped in advance for the purposes of being fitted together in a definite and pre-determined relative geometric relationship in the final bonded composite structure. The preferred lignocellulosic composites are laminates containing at least two wood boards, wood veneers, or wood strips that have been laminated together. The preferred laminates are in accordance with the specifications of ASTM D-2559-00, as are the methods of adhesive testing and the preferred requirements for successful adhesive performance. Lignocellulosic substrates with a well-defined and consistent geometry are most preferred for use in preparing lignocellulosic laminates according to the processes of the invention. Substrates with a less defined geometry, such as raw furnish used in production of chipboards, fiberboards, particleboards, and the like may, however, also optionally be used in preparing lignocellulosic composites employing the adhesive systems disclosed herein. Non-limiting examples of the types of composites best suited to the processes disclosed herein include, without limitation, lignocellulosic substrates having a relatively well-defined geometry, such as laminated veneer lumber (LVL), plywood, composite beams (such as I-beams, also known as I-Joists), and laminated strand lumber.

The adhesives disclosed herein may also be used to prepare composites that comprise lignocellulosic substrates that are themselves composites. For example, laminated beams and I-joists may be prepared using the adhesive prepolymers disclosed herein from substrates that include, without limitation, boards or strips made of OSB, particleboard, fiberboard, and combinations thereof.

Any wood species that is known in the art to be capable of being bonded with the aid of polyisocyanate-based adhesive systems may be used with the adhesives disclosed herein. Non-limiting examples of wood species suitable for use in the processes disclosed herein include southern yellow pine (SYP) and Douglass fir (DF). Southern yellow pine (SYP) is known to be particularly preferred. Combinations of these two species may optionally be used in preparing a given composite article, but it is generally more preferred to use one species alone in the production of any given lignocellulosic composite article. It is, of course, also possible to use combinations of one or more of these preferred species in combination with other wood species.

The polyisocyanate-based prepolymer adhesive formulations disclosed herein contain free organically bound isocyanate groups. Polyisocyanate compositions suitable as starting materials for use in forming the polyisocyanate adhesive prepolymer formulations according to the invention may include any of the known organic polyisocyanate products, including base (monomeric) polyisocyanates, other isocyanate group terminated prepolymers, or combinations of these. The polyisocyanates have free organically bound isocyanate (-NCO) groups. The term "polyisocyanate" in the context of the present invention is understood to encompass difunctional isocyanate species, higher functionality isocyanate species, and mixtures thereof. The term "base" polyisocyanate (or monomeric polyisocyanate) will be understood to refer to polyisocyanates which have not been modified by reaction with isocyanate reactive species to form prepolymers. This term does, however, encompass polyisocyanates that have been modified by various known self-condensation reactions of polyisocyanates, such as carbodiimide modification, uretonimine modification, trimer (isocyanurate) modification, allophanate modification, and biuret modification under the proviso that the modified polyisocyanate still contains free isocyanate groups available for further reaction.

Additionally, a majority of the isocyanate groups of the polyisocyanate adhesive are preferably bonded directly to aromatic rings. Further, the polyisocyanate adhesive according to the invention contains tertiary amine groups. Also, the polyisocyanate adhesive may optionally include an inert filler and/or an (also optional) inert, substantially non-volatile, oil. In one particular embodiment, the polyisocyanate adhesive contains a dispersed organic reinforcing filler that is at least semi-crystalline. This dispersed filler may optionally contain groups that are reactive towards isocyanate groups, thereby forming a dispersed optional isocyanate terminated prepolymer species, which is in addition to the prepolymeric species required in the context of the present invention.

Base polyisocyanates useful in forming the adhesives of present invention are those having a number-average isocyanate functionality of about 2.0 or greater, preferably greater than 2.1, more preferably greater than 2.3, and most preferably greater than 2.4. The base polyisocyanates should have a number average molecular weight of from about 100 to about 5000, preferably about 120 to about 1800, more preferably 150 to 1000, still more preferably 170 to 700, even more preferably 180 to 500, and most preferably 200 to 400. Preferably, at least 80 mole percent and more preferably greater than 95 mole percent of the isocyanate groups of the base polyisocyanate composition are bonded directly to aromatic rings. Examples of suitable base polyisocyanates include aromatic polyisocyanates such as p-phenylene diisocyanate, m-phenylene diisocyanate, 2,4-toluene diisocyanate, 2,6-toluene diisocyanate, naphthalene diisocyanates, dianisidine diisocyanate, polymethylene polyphenyl polyisocyanates, 2,4'-diphenylmethane diisocyanate (2,4 '-MDI), 4,4'-diphenylmethane diisocyanate (4,4'-MDI), 2,2'-diphenylmethane diisocyanate (2,2'-MDI), 3,3'-dimethyl-4,4'-biphenylenediisocyanate, mixtures of these, and the like. Polymethylene polyphenyl polyisocyanates (MDI series polyisocyanates) having number averaged functionalities of greater than 2 are an especially preferred family of aromatic polyisocyanates. MDI base polyisocyanates should preferably have a combined 2,4'-MDI and 2,2'-MDI content of less than 18.0%, more preferably less than 10% and most preferably less than 5%. However, any MDI diisocyanate isomer composition is suitable for use. MDI diisocyanate isomers, mixtures of these isomers with tri and higher functionality polymethylene polyphenyl polyisocyanates, the tri or higher functionality polymethylene polyphenyl polyisocyanates themselves, and non-prepolymer derivatives of MDI series polyisocyanates (such as the carbodiimide, uretonimine, and/or isocyanurate modified derivatives) may also be used.

The base polyisocyanates may optionally include minor amounts of aliphatic polyisocyanates. Suitable aliphatic polyisocyanates include isophorone diisocyanate, 1,6-hexamethylene diisocyanate, 1,4-cyclohexyl diisocyanate, saturated analogues of the above-mentioned aromatic polyisocyanates, isocyanate functional non-prepolymer derivatives of these, and mixtures thereof.

The base polyisocyanates preferably comprise a polymeric polyisocyanate, and more preferably polymeric diphenylmethane diisocyanate (polymethylene polyphenyl polyisocyanate) species of functionality 3 or greater. Commercially available polymeric polyisocyanates of the MDI series include RUBINATE® M polyisocyanate (commercially available from Huntsman International LLC with a number averaged isocyanate group functionality of about 2.7). This isocyanate product is a complex mixture of MDI series diisocyanates and higher functionality MDI series polyisocyanates. The MDI series diisocyanates present in this product are predominantly 4,4'-MDI, with lesser amounts of 2,4'-MDI and traces of 2,2'-MDI. Polymeric MDI products, such as RUBINATE® M polyisocyanate, may be further diluted with MDI series diisocyanates if desired. Some such dilution is preferred when the polymeric MDI is employed as the base polyisocyanate for preparing a prepolymer according to the invention.

Another suitable category of possible starting polyisocyanates includes quasiprepolymers of MDI series base polyisocyanates. The term quasiprepolymer is understood to mean that the polyisocyanate comprises both isocyanate group terminated reaction products of one or more isocyanate-reactive materials, such as polyols, and also some residual (unreacted) monomeric polyisocyanate (base polyisocyanate). Full prepolymers, which are by definition free of residual monomeric polyisocyanate species, may optionally be employed as starting isocyanates for the synthesis of the prepolymer adhesives according to the invention. However, it is one or more members selected from the group consisting of the base (monomeric) polyisocyanates and the quasiprepolymers which are preferred starting isocyanates for the preparation of the adhesives of the invention. The base (monomeric) polyisocyanates are the most preferred isocyanate raw materials for this purpose.

The term "prepolymer" is often used generically to denote both quasiprepolymers and full prepolymers. The specific type of prepolymer (i.e. quasi or full) will be denoted herein when it is necessary to make the distinction. Otherwise, the generic term will be used. Different types of prepolymers that are present together in a mixed prepolymer, such as the adhesives according to the invention, will be denoted as "prepolymer species" (or "prepolymeric species"). These are the isocyanate-terminated reaction products of individual types of isocyanate-reactive starting materials, in which the latter have been reacted with a molar excess of a precursor polyisocyanate (i.e. a base polyisocyanate) to form the former. The adhesives according to the invention contain at least two specific types of prepolymeric species, and preferably also contain some unreacted monomeric (base) polyisocyanates.

The preferred isocyanate adhesives are members of a subclass of prepolymers of MDI series base polyisocyanates that contain a combination of at least two very specific kinds of isocyanate-group-terminated prepolymeric species, denoted below as A and B:
A) the prepolymerized reaction products of at least one tertiary amine containing polyahl as described below and, in combination therewith,
B) the prepolymerized reaction product of at least one hydrocarbon-backbone polyahl which has a number averaged molecular weight of greater than 400 as described below.

Isocyanate adhesives according to the invention may be quasiprepolymers or full prepolymers, but quasiprepolymers are more preferred.

The tertiary amine groups present in the Type-A prepolymer species comprise aliphatic tertiary amines. In an aliphatic tertiary amine, all three of the organic substituents on the amine nitrogen atom are bonded thereto by way of aliphatic carbon atoms.

The generic term "polyahl" is defined as "polyfunctional active hydrogen compound". The term "polyfunctional" is to be understood as denoting "greater than 1" functional groups per molecule. The active hydrogen groups in a polyahl may be the same or different. A preferred class of polyahls are the polyols. A suitable polyahl may contain, on a number averaged basis, from about 1.2 to about 10 active hydrogen groups per molecule, but more preferably from about 1.4 to 8, still more preferably 1.6 to about 8, and even more preferably 1.8 to 6. Ideally, the polyahl should contain at least two active hydrogen groups per molecule.

The active hydrogen groups present on the polyahl are capable of reacting with isocyanate groups in the presence of excess base polyisocyanate to form isocyanate terminated prepolymeric species. Non limiting examples of suitable active hydrogen groups include aliphatic alcohol groups, phenols, primary amines, secondary amines, and combinations of these. Primary and secondary aliphatic alcohol groups are most preferred. The preferred Type-A prepolymer species of the adhesive composition according to the invention is preferably formed from the reaction of an MDI series base polyisocyanate composition with an aliphatic amine initiated polyol (an alkanolamine). The preferred aliphatic amine initiated polyols (alkanolamines) for this purpose are aliphatic amine initiated polyether polyols formed from the addition of one or more alkylene oxides, such as, but not limited to propylene oxide, ethylene oxide, and/or butylenes oxide, to an aliphatic amine initiator and/or to ammonia. However, simpler alkanolamine polyols, which are not polyethers and which may contain no ether linkages at all, may be used as the source of the Type-A prepolymeric species. The Type-A prepolymeric species must contain a tertiary amine.

Polyols are particularly preferred for preparing the isocyanate terminated prepolymers. For the Type-A prepolymer species, suitable precursor polyols preferably contain at least one aliphatic tertiary amine-initiated polyol having a content of ethylene oxide (oxyethylene) units of at least 1% by weight. Other types of polyols may optionally be used in combination with the said aliphatic tertiary amine polyol. The preferred aliphatic tertiary amine polyol, for use in preparing the preferred prepolymer Type-A species, is at least one hydroxy functional compound having two or more organic -OH groups and at least one aliphatic tertiary amine-initiator group wherein said aliphatic amine-initiated polyol compound is characterized by having an ethylene oxide content of at least 1% by weight of the molecule. Mixtures of more than one such tertiary amine containing polyol compound may of course be used if desired. Preferably, the ethylene oxide content of the tertiary amine polyol is from about 1 to about 90%, more preferably about 5 to about 60%, and most preferably about 10 to about 40% by weight of the molecule. The aliphatic tertiary amine-initiated polyol desirably provides an ethylene oxide content in the final one-component adhesive composition of about 0.01 to about 27% by weight, preferably about 0.35 to about 12%, and most preferably about 1 to about 8% by weight of the total adhesive composition. It has been found that the preferred amine initiated polyol may contain any amount of propylene oxide, which is consistent with these limits on the ethylene oxide content thereof Preferred aliphatic tertiary amine-initiated polyols (alkanolamines) include the known alkoxylation products of aliphatic amines or aminoalcohols having at least two active hydrogen atoms with ethylene oxide and propylene oxide.

Suitable initiator molecules that may be used to prepare the alkanolamines include: ammonia, ethylene diamine, hexamethylene diamine, methyl amine, isopropanolamine, diisopropanolamine, ethanolamine, diethanolamine, N-methyl diethanolamine, tetrahydroxyethyl ethylenediamine, mixtures of these initiators, and the like. The most suitable aliphatic tertiary amine-initiated polyols, suitable for preparing the Type-A (alkanolamine) prepolymer species, are those wherein the initiator comprises about 1 to about 18 and preferably about 1 to about 6 carbon atoms. Preferred aliphatic tertiary amine-initiated polyols, as precursors to the Type-A prepolymer species, are those which have a number averaged molecular weight of about 1000 to about 10,000 and more preferably 1000 to about 6000 and a number average OH functionality of about 1.8 to about 6.0, more preferably 2.0 to 6.0, and even more preferably 2.0 to 4.0.

The molecular weights, equivalent weights, and group functionalities of polymeric or oligomeric compounds referred to in this application are number averaged. The molecular weights, equivalent weights, and group functionalities of pure compounds are absolute.

It has been found that the concentration of tertiary aliphatically bound amine nitrogen in the amine-initiated polyol is related to the effectiveness (i.e. desired fast cure rate) of the final adhesive composition. In general, it is preferred that the tertiary aliphatically bound amine nitrogen concentration in the final adhesive composition, due to the aliphatic amine-initiated polyol(s), should be about 0.002 to about 0.05 eqN/100g, more preferably about 0.005 to about 0.025 eqN/100g, still more preferably about 0.01 to about 0.02 eqN/100g, and most preferably about 0.012 to about 0.016 eqN/100g of the adhesive composition. The term "eqN" in the previous sentence refers to the number of equivalents of tertiary aliphatic nitrogen contributed by the aliphatic amine initiated polyol(s), and the weight (100g) is that of the final adhesive composition. Preferred amine-initiated aliphatic polyether polyols, for use in making the preferred adhesives, include those prepared from ethylene diamine, triethylene tetramine and/or triethanolamine, as the initiators. The more preferred adhesive compositions are derived from the aliphatic tertiary amine-initiated polyol component, in an amount of about 1 to about 30%, preferably about 3 to about 20% and most preferably about 5 to about 20% by weight based upon the total weight of the adhesive composition. In its most preferred form, the amine-initiated polyol is an ethylene diamine-initiated polyol derived from an alkylene oxide composition comprising ethylene oxide. Suitable ethylene diamine-initiated polyols are those having an ethylene oxide content of about 1 to about 90% by weight, preferably about 5 to about 60%, and most preferably about 10 to about 40% by weight of the polyol. The ethylene oxide content refers to the amount of ethylene oxide utilized in the preparation of the amine initiated polyols as discussed above.

During production of the preferred amine initiated polyols, the ethylene oxide reacts with the initiator. These polyols should most preferably have a molecular weight in the range of 1000 to 5000, but even more preferably 1200 to 3000, and still more preferably 1400 to 2000. The most preferred amine initiated polyols are free of primary or secondary amine groups. Non-limiting examples of suitable ethylene-diamine initiated polyols useful in preparing the preferred Type-A prerpolymeric species in the adhesive compositions include those of the following general formula:

**(H[EO]_{y}[PO]ₓ)₂N-CH₂CH₂-N([PO]ₓ[EO]_{y}H)₂**

wherein x denotes the number of PO units in each polyether chain and has a value of from about 1.0 to about 29.0 on a number averaged basis, preferably about 4.0 to about 20 and most preferably about 4.0 to about 14 on a number averaged basis; and y denotes the number of EO units in each polyether chain and has a value of from about 1.0 to about 10.0 on a number averaged basis and preferably about 2.0 to about 4.0 on a number averaged basis. The expression "EO" denotes a single oxyethyene unit in the polyether chain. The expression "PO" denotes a single oxypropylene unit in the polyether chain. The expression "N" is a nitrogen atom from the ethylene diamine initiator.

Among the most preferred ethylene diamine-initiated polyols available commercially are those such as the SYNPERONIC® T brand polyols available from ICI Americas, Inc. A particularly preferred example of this commercial series of polyols is SYNPERONIC® T/304 polyol. Another commercial polyol product believed to be of very similar structure is TETRONIC® T-304 polyol, which is commercially available from BASF Corporation.

Although not wishing to be limited to a single theory, it is believed that the amine-initiated polyol reaction product (the Type-A prepolymer species) remains inactive in the prepolymer based adhesive composition until it comes into contact with the moisture in or on the substrate (i.e. wood). Once the amine initiated polyol reaction product contacts the moisture, it is believed to promote the reaction between the free -NCO groups of the polyisocyanate adhesive and water on the substrate, thus accelerating cure and adhesion. The result is that the more preferred polyisocyanate adhesives are relatively fast curing, and are especially well suited for cold-curing applications. Moreover, the adhesive remains on the surface of the substrate where it is most effective and can develop the cold tack most desirable for processing.

Other polyahls may optionally be used in combination with the amine-initiated polyol (described above) in the isocyanate reactive component used for forming the preferred adhesive systems. It is generally within the scope of the invention to include one or more optional non-amine containing polyols, in addition to the amine-initiated polyol, in forming the final adhesive composition. It is desirable, however, that the ethylene oxide containing aliphatic amine-initiated polyether polyol comprise at least 5% by weight of the total combination of polyahls (i.e. the entire isocyanate reactive composition) used in making the final adhesive prepolymer. It is more desirable that the ethylene oxide containing aliphatic amine-initiated polyether polyol comprise at least 15% by weight, still more desirably at least 20% by weight, even more desirably at least 25% by weight, and most desirably at least 30% by weight of the total isocyanate reactive composition used in making the final prepolymer-based adhesive composition. Non-limiting examples of possible kinds of optional additional non-amine polyols which can be used in forming adhesive compositions according to the invention include: (a) polyether polyols and/or thioether polyols having number averaged molecular weight of from about 400 to 8000 and a number average hydroxyl functionality of from about 1.9 to 4, (b) polyester polyols having a number averaged molecular weight of 400 or more and a number average hydroxyl functionality of from about 1.9 to 4, and (c) hydrocarbon based polyols of molecular weight 400 or less and functionality 1.9 to 4. Optional additional prepolymeric species derived from optional polyether polyols appear to be undesirable, since the presence of these extra polyether preplymeric species in the polyisocyanate adhesive detracts from the thermal stability of the glue line in derived lignocellulosic composites. As such, it is highly preferred to avoid using or at least minimize the use of unnecessary (optional) polyether polyols in these polyisocyanate based adhesive compositions of the invention.

In addition to the required Type-A (alkanolamine) prepolymer species, and any optional additional prepolymer species which may also be present, the adhesive compositions according to the invention should also contain a second type of prepolymer species. This is the Type-B prepolymer species, which is derived from a hydrocarbon backbone polyahl of number averaged molecular weight greater than 400. This "Type-B" prepolymer species, which has been found to be particularly important for improving the heat resistance of the glue line, is preferably derived from an aliphatic hydrocarbon backbone polyol.

The term "hydrocarbon backbone polyahl" refers to a polyahl which consists predominantly by weight of one or more contiguous hydrocarbon bodies connecting the active hydrogen functional groups. The individual contiguous hydrocarbon bodies should contain greater than 10 carbon atoms in a row uninterrupted by any hetero-atoms, more preferably greater than 20 carbons, and still more preferably greater than 30. Preferably, these individual contiguous hydrocarbon bodies comprise uninterrupted chains of carbon atoms situated in such a way as to connect two or more of the active hydrogen functional groups of the polyahl, said connecting chains containing greater than 10 carbon atoms in a row, more preferably 20 or more carbon atoms in a row, still more preferably 30 or more carbon atoms in a row, and even more preferably of 40 or more carbon atoms in a row. These contiguous connecting hydrocarbon chains may optionally also contain one or more additional hydrocarbon side chains, said optional side chains not terminating in an active hydrogen functional group. When the optional hydrocarbon side chains are present, they are preferably selected from the group consisting of alkyl groups, alkenyl groups, and combinations of alkyl and alkenyl groups. Preferably, the optional hydrocarbon side chains, when present, are in the range of 1 to 5 carbons in size. They are short relative to the main (connecting) chains.

In a highly preferred embodiment, greater than 55% of the weight of the hydrocarbon backbone polyol is due to these contiguous hydrocarbon chains and their optional hydrocarbon side chains, more preferably greater than 60%, still more preferably greater than 70%, and even more preferably greater than 80%. Most preferably, 90% or more of the weight of the hydrocarbon backbone polyahl is due to the contiguous hydrocarbon chain(s) and their optional hydrocarbon side chain(s). The hydrocarbon backbone polyahl may optionally contain some hetero atoms in the backbone in order, for example, to facilitate the attachment of active hydrogen groups at the chain ends and/or to provide sites for initiation of the growth of hydrocarbon chains during the synthesis of the polyahl. However, these hetero-atoms should be kept to a minimum. In preferred embodiments, the hydrocarbon backbone polyahl contains a single contiguous hydrocarbon chain (optionally with additional hydrocarbon side chains) connecting the active hydrogen groups. In the most preferred embodiments, the hydrocarbon backbone polyahl is a hydrocarbon backbone polyol which contains no hetero-atoms other than the terminal isocyanate-reactive functional groups (alcohol groups) and hydrogen.

The hydrocarbon backbone polyahls for use in the present invention comprise polyalkadiene polyahls and the fully or partially hydrogenated derivatives thereof. The dienes that may be employed to make the polyalkadiene polyahls include the unsubstituted, 2-substituted or 2,3-disubstituted 1,3-dienes of 4 up to about 12 carbon atoms. The diene preferably has up to 6 carbon atoms and the substituents in the 2- and/or 3-position may be hydrogen, alkyl, generally lower alkyl, e.g., of 1 to 4 carbon atoms, aryl (substituted or unsubstituted), halogen, nitro, nitrile, etc. Typical dienes that may be employed are 1,3-butadiene, isoprene, chloroprene, 2-cyano-1,3-butadiene, 2,3-dimethyl-1,3-butadiene, 2phenyl-1,3-butadiene, 2-methyl3-phenyl-1,3-butadiene, etc. Examples of polyalkadiene polyahls include polybutadiene polyahls, polyisoprene polyahls, polybutadiene-polyisoprene copolymer polyahls, any of the partially or fully epoxidized derivatives thereof and/or any of the partially or fully saturated (hydrogenated) derivatives thereof, and mixtures thereof. The preferred hydrocarbon backbone polyahls are fully aliphatic hydrocarbon polyols. The preferred types of hydroxyl groups present on these polyols are selected from among primary alcohol groups, secondary alcohol groups, and combinations of these. The hydrocarbon backbone polyahl should have a molecular weight of greater than 400, preferably from about 500 to about 10,000, more preferably from 600 to 8000, still more preferably from 800 to 6000, yet more preferably from 900 to 5000, even more preferably from 1000 to 4000, and most preferably from 1100 to 2500. The hydrocarbon backbone polyahl should contain from 1.2 to 10 active hydrogen functional groups per molecule on a number averaged basis, but much more preferably from 1.4 to 8, still more preferably from 1.5 to 8, even more preferably from 1.6 to 6, yet more preferably from 1.8 to 4, and most preferably from 1.9 to 3 such functional groups. Ideally, each of the hydrocarbon backbone polyols, used in forming the adhesive prepolymer according to the invention, should be at least difunctional. A particularly preferred class of these hydrocarbon backbone polyols for use in the invention are nominal diols, with the individual hydroxyl groups at opposite ends of a hydrocarbon main chain. This main chain usually contains some hydrocarbon side chains, typically of 1 to 3 carbons in length.

The hydrocarbon backbone polyahl contains at least some ethylenic unsaturation. This unsaturation can be in the hydrocarbon backbone chain and/or attached thereto as alkenyl side chains.

Polybutadiene backbone polyols, particularly diols, are an example of an especially preferred class of hydrocarbon backbone polyahls.

The hydrocarbon backbone polyahl may consist of a single polyahl or a mixture of such polyahls. If a mixture is used then each of the constituents of the mixture should preferably conform individually to the definition of the hydrocarbon backbone polyahl, as provided above.

The composition of the isocyanate reactive species used in making the prepolymer based adhesives of the invention consists of at least one tertiary amine initiated polyahl, at least one hydrocarbon backbone polyahl, and any optional additional polyahls as noted previously. The preferred amounts, as a percentage by weight of the total composition of the isocyanate reactive species, contributed by the tertiary amine initiated polyol has been discussed previously. The hydrocarbon backbone polyahl preferably accounts for at least 5% by weight of this (total) isocyanate reactive species composition used to make the adhesive according to the invention. More preferably the hydrocarbon backbone polyol accounts for at least 10%, still more preferably at least 20%, yet more preferably at least 25%, and most preferably 30% or more by weight of the total isocyanate reactive species used in making the adhesive according to the invention. The weight ratio of the amine initiated polyahl (precursor of the Type-A prepolymer species) to the hydrocarbon backbone polyahl (precursor of the Type-B prepolymer species) is desirably in the range of form 90:10 to 10:90, but more preferably in the range of 80:20 to 20:80, and even more preferably is in the range of 75:25 to 25:75. The weight ratio of the Type-A prepolymer species in the adhesive formulation to the Type-B prepolymer species in the formulation is desirably between 95:5 and 5:95, but more preferably is in the range of 90:10 to 10:90, even more preferably in the range of 80:20 to 20:80, yet more preferably in the range of 70:30 to 30:70, and most preferably in the range of from 65:35 to 35:65.

The individual (Type-A, Type-B, and any additional optional) prepolymer species in the final adhesive composition according to the invention may be formed by using any of the generic prepolymerization methods known in the art. These include the option of forming a mixed blend of all the appropriate precursor polyahls, in their appropriate precursor ratios, and reaction thereof with a stoichiometric excess of an appropriate precursor polyisocyanate (preferably a base polyisocyanate) composition. However, it is also possible and within the scope of the invention to react the individual polyahls into the precursor isocyanate composition sequentially, in any desired order. It is further possible to first form two or more separate prepolymers from the different polyahls, optionally using different precursor polyisocyanate compositions, and then combine them to produce the final prepolymer according to the invention by blending the separate prepolymers together later. This latter option of blending provides for greater flexibility in formulating the adhesives according to the invention, and is particularly convenient if a large number of formulation variations are to be used. In any case, a large number of intermediate possibilities, within the scope of the invention, will be readily apparent to those skilled in the art and need not all be elaborated here. Moreover, the generic methods for the synthesis of prepolymers are sufficiently well described in the prior art that they will not be discussed in detail here (except in the Examples below). Urethane type prepolymers are the most preferred.

As noted previously, the preferred prepolymer-based adhesives according to the invention are quasiprepolymers. The quasiprepolymers contain some free monomeric polyisocyanate species in addition to the various prepolymeric species present. The preferred quasiprepolymers are derived entirely from base polyisocyanate compositions of the MDI series. The preferred quasiprepolymer adhesives according to the invention have free isocyanate group (-NCO) concentrations in the range of from 5 to 32% by weight, but more preferably from 8 to 29%, still more preferably from 9 to 28%, even more preferably from 10 to 27%, yet more preferably from greater than 10 to 26%, and most preferably from 16 to 26% by weight.

In those situations where optional additional prepolymer species are incorporated into the adhesive formulations, it is desirable that the combined weight of the essential prepolymeric species in the adhesive (ie. the combined weight of the Type-A and Type-B prepolymer species present) should be greater than 10% by weight of the total prepolymer species present (i.e. Type-A plus Type-B plus any optional additional prepolymer species), more preferably greater than 20%, still more preferably greater than 25%, even more preferably greater than 30%, yet more preferably greater than 40%, and most preferably 50% or more.

Desirably, the base polyisocyanate composition, used in making the preferred quasiprepolymer adhesives according to the invention, are a blend of polymeric MDI (such as the aforementioned RUBINATE® M polyisocyanate) and a pure MDI such as 4,4'-MDI. Such blends have been found to provide improved penetration into lignocellulosic substrates and higher wood failure as opposed to glue line failure. A commercially available pure MDI product suitable for use in the present invention is RUBINATE® 44 diisocyanate, available commercially from Huntsman International LLC. This is a 4,4'-MDI diisocyanate product. These base polyisocyanate blends preferably contain a ratio of the above-cited polymeric MDI type product to the above-cited pure MDI product in the range of about 95:5 to 50:50 and preferably 60:40 to 80:20, by weight. It is to be noted that commercial polymeric MDI type products, like RUBINATE® M isocyanate, already contain some diisocyanates of the MDI series in addition to the higher functionality MDI series isocyanates. Therefore these preferred blends represent a further dilution of said higher functionality MDI series isocyanates by MDI series diisocyanate(s).

The present polyisocyanate adhesive compositions may optionally further comprise various non-isocyanate-reactive (inert) compounds having a catalytic function to improve the cure rate of the adhesive system. Examples of appropriate catalysts suitable in this optional role are, for example, the non-isocyanate-reactive tertiary amine catalysts and the organometallic catalysts. By non-isocyanate-reactive, it is meant that the optional catalytic species is free of active hydrogen groups in the molecule. The optional catalyst is therefore quite distinct structurally from the desired amine-initiated polyols, but may be used in addition to these tertiary amine containing polyols as an additional source of catalytically effective aliphatic tertiary amine groups in the polyisocyanate adhesive. Suitable non-reactive tertiary amine catalysts are available commercially as, for example, NIAX® A-4 catalyst and NIAX® A-1 catalyst, available commercially from OSI Specialties Division of Witco Corporation, and JEFFCAT® DMDEE catalyst available from Huntsman Petrochemical Corporation. When used in the polyisocyanate prepolymer adhesive according to the invention, the optional catalysts are preferably contained in an amount of from about 0.0005 to about 2.0% by weight, preferably about 0.001 to about 1.0% by weight, and more preferably from about 0.0025 to 0.7% by weight relative to the final total weight of the adhesive composition.

The preferred quasiprepolymers may be prepared by simply mixing an excess of the base polyisocyanate composition and the polyol composition under suitable conditions to promote isocyanate-terminated prepolymer formation, particularly if both the base polyisocyanate and polyol compositions are all liquids at 25°C (as is often the case). No moisture should be allowed to enter the prepolymer-forming reaction. If one of the precursor ingredients of the prepolymer is a solid, that ingredient should be fully dissolved in the other (liquid) precursor ingredients. In any event, the components may be mixed or blended by any means evident to one skilled in the art from the present disclosure.

One preferred class of quasiprepolymer adhesives according to the invention are liquid at 25°C, having a viscosity at 25°C of less than 10,000 cps, and still more preferably less than 5000 cps, at 25°C.

The polyahls should preferably be fully reacted with the base polyisocyanate, in forming the prepolymer.

A preferred subclass of polyisocyanate-prepolymer adhesive compositions desirably contain a particulate filler dispersed therein. Conventional fillers, such as calcium carbonate, calcium oxide, clays, silica, silicates such as talc, and mixtures thereof are suitable for this optional purpose. The dispersed filler, if used, should be of a particle size that does not readily result in the bulk separation of the filler from the polyisocyanate prepolymer dispersion on standing. The dispersion of the filler in the prepolymer composition should be stable to bulk separation for at least long enough to permit the storage of the adhesive, preferably without the need for continuous agitation thereof, for at least 24 hours under ambient conditions (protected from moisture). It is highly preferred that the final polyisocyanate adhesive (including any additives) used in the process of the invention should be storage stable at 25 °C, without agitation, for at least 7 days, and more preferably at least 30 days, without bulk separation of the filler. The optimum average particle size needed to achieve the desired level of stability will depend upon the type of filler used.

In a preferred embodiment, a minor amount by weight relative to the total filler loading of CaO is pre-mixed with the other fillers, which consist essentially of talc in this embodiment, as a drying agent. This CaO drying operation is preferably conducted before the fillers are combined with the isocyanate group containing ingredients of the final polyisocyanate adhesive composition.

The fillers, when used, are generally added to the composition and mechanically mixed. Those skilled in the art will, however, appreciate many possible variations on the mixing procedure are possible.

The optional fillers have also been found useful to hold the adhesive on the surface of the substrate to be treated, thereby providing for a gap filling effect. A highly preferred class of particulate fillers includes talc, and mixtures of talc with calcium oxide. The preferred average particle size (average particle diameter) for these types of fillers is in the range of from 0.5 microns to 60 microns, but is more preferably in the range of from 1.0 microns to 5.0 microns. The optional talc/calcium oxide mixtures in this embodiment are particularly preferred because the calcium oxide serves as a drying agent, to remove any available water from the surface of the talc, and prevent it from reacting with the free isocyanate groups present in the polyisocyanate adhesive. It is highly desirable that any filler used should be sufficiently free of available water so that the final adhesive composition remains sufficiently free of gels and of low enough viscosity to permit application of the final adhesive composition onto substrates and to be consistent with the desired degree of shelf stability. The amount of the particulate filler by weight relative to the final polyisocyanate adhesive composition may vary considerably depending upon the types of optional particulate fillers used. Effective amounts of filler (when used) may extend from as little as 1% by weight to as much as 50% by weight, but is preferably in the range of about 2 to 30%, more preferably 5 to 25%, still more preferably 5 to 20%, even more preferably 10 to 20%, and most preferably 12 to 18% by weight relative to the total polyisocyanate adhesive composition.

A subclass of polyisocyanate adhesive compositions suitable for use in the invention contain an inert fatty ester. The fatty ester, when used, may be a single compound or a mixture of such compounds, but is preferred to be predominantly aliphatic fatty esters by weight. More preferably, the inert fatty ester component is entirely aliphatic. The term "inert", as applied to the optional fatty ester additive, is meant to indicate that the fatty ester component is essentially free of molecular species containing groups reactive towards isocyanates under the conditions of blend preparation or storage of the blend. By "essentially free" it is meant that the fatty ester component contains less than 10% by weight, preferably less than 5% by weight, more preferably less than 3% by weight, still more preferably less than 2% by weight, even more preferably less than 1% by weight, most preferably less than 0.5%, and ideally less than 0.1% by weight of molecular species bearing functional groups reactive towards the isocyanate species present under the conditions of blend preparation or storage.

The optional fatty ester additive in the polyisocyanate adhesive should be substantially non-volatile. By the term "substantially non-volatile" it is meant that the fatty ester component is essentially free of compounds boiling lower than 200°C at 1 standard atmosphere pressure (760 mmHg). More preferably, the fatty ester is essentially free of compounds boiling lower than 250°C at 1 atmosphere pressure. Still more preferably, the optional fatty ester component is essentially free of compounds boiling lower than 300°C at 1 atmosphere pressure. Even more preferably, the fatty ester component is essentially free of compounds boiling below 350°C at 1 atmosphere pressure. Most preferably, the fatty ester component is essentially free of compounds boiling lower than 400°C at 1 atmosphere pressure. By "essentially free" it is meant that the fatty ester component contains less than 10% by weight, preferably less than 5% by weight, more preferably less than 3% by weight, still more preferably less than 2% by weight, even more preferably less than 1% by weight, most preferably less than 0.5%, and ideally less than 0.1% by weight of compounds (molecular species) having boiling points lower than the boiling point indicated. The essential absence of low boiling species in the optional fatty ester additive should result in a fatty ester additive which is characterized by having its initial boiling point at 1 atmosphere pressure of at least 125°C, more preferably at least 150°C, still more preferably at least 180°C, even more preferably at least 200°C, and most preferably greater than 200°C.

The optional fatty ester additive should be soluble in the isocyanate-containing species in the adhesive, and more preferably is miscible with the polyisocyanates in all proportions at 25°C. The optional fatty ester additive is preferably a liquid at 25°C. The optional fatty ester additive preferably has a viscosity at 25°C that is lower than that of the combined polyisocyanate species, at 25°C. The optional fatty ester additive desirably comprises at least one fatty ester compound of 20 carbons or more, preferably of 30 carbons or more. The individual compounds present in the inert fatty ester additive composition more preferably contain at least 20 carbon atoms, and most preferably at least 30 carbon atoms.

A preferred class of compounds suitable for use as the optional fatty ester additive are inert triglyceride oils, or mixtures of such triglyceride oils. Other types of optional fatty ester compounds may be used if desired, either instead of or in addition to triglyceride oils. The triglyceride oils, when used in the polyisocyanate adhesive, are preferably liquid at 25°C and have a viscosity lower than that of the combined polyisocyanate species present, at 25°C. The triglyceride oils, when used, preferably consist essentially of organic aliphatic molecular species having at least 33 carbon atoms and at least one triglyceride ester moiety. The more preferred triglyceride oils consist essentially of molecular species having greater than 50 carbon atoms. The more preferred triglyceride oils are the triglycerides of aliphatic fatty acids having between 10 and 25 carbon atoms. Still more preferred are the triglycerides of aliphatic fatty acids having from 16 to 20 carbon atoms. The most preferred of the optional triglycerides are triglycerides of C-18 fatty acids wherein at least one of the said C-18 fatty acid units per triglyceride molecule contains at least one unit of ethylenic unsaturation. The most preferred triglyceride oils contain a plurality of units of ethylenic unsaturation per molecule. Non-limiting examples of highly preferred optional triglyceride oils include liquid vegetable oils such as linseed oil and soy oil. Soy oil is particularly preferred as an optional additive. An example of a commercial soy oil product is RBD® SOYBEAN OIL, from Archer Daniels Midland Corporation.

An example of a preferred grade of linseed oil is a dewaxed linseed oil. Dewaxed linseed oil compositions are known in the art and available commercially. Other dewaxed liquid vegetable oils may also be used as the optional triglyceride oil in the adhesive compositions useful in the invention. Dewaxed vegetable oils have been treated to remove most of the solid waxy impurities that are sometimes present in raw vegetable oil. A specific example of a dewaxed linseed oil product suitable for use as an optional additive in the polyisocyanate adhesive composition is SUPERB® linseed oil, which is commercially available from the Archer Daniels Midland Corporation. Crude linseed may also be used, if desired. Likewise, crude soybean oil may be used. A specific example of a crude linseed oil product that is suitable for use is "raw" linseed oil, which is commercially available from the Archer Daniels Midland Corporation.

The optional liquid triglyceride oil additive most preferably has a viscosity (at 25°C) that is less than the viscosity of the combined polyisocyanate species present in the adhesive with which it is to be blended (also measured at 25°C). The blend of the combined polyisocyanate species with the triglyceride oil is most preferably lower in viscosity than the combined polyisocyanate species by itself (compared at 25°C).

The optional triglyceride oil additive is preferred to be substantially free of compounds that are not aliphatic triglycerides. By "aliphatic triglyceride" is meant a compound that contains at least one triglyceride unit, and preferably only one triglyceride unit, and is free of aromatic rings. By "substantially free" in this context it is meant that the triglyceride oil contains less than 20% by weight of non-triglyceride compounds, preferably less than 15% by weight, more preferably less than 10% by weight, still more preferably less than 5% by weight, most preferably less than 2% by weight, and ideally less than 1% by weight of non-triglyceride compounds.

The preferred triglyceride oils suitable for use as optional additives in the polyisocyanate can be used to dilute monomeric (base) polyisocyanates, or to dilute the more preferred quasiprepolymer polyisocyanates comprising the isocyanate terminated prepolymer species. Any suitable order of addition of the various ingredients, in forming the final polyisocyanate adhesive, is acceptable as long as it results in a useable adhesive composition. The more preferred blends are made from the polyisocyanate compositions comprising the required isocyanate terminated prepolymer species and monomeric polyisocyanate species (*i.e.* quasiprepolymers).

The preferred optional triglyceride oils are non-toxic natural products that are substantially non-volatile and substantially free of offensive odors. Mixtures of different inert triglyceride oils may of course be used if desired.

The total level of the optional inert fatty ester additive, when used, in the final polyisocyanate adhesive composition is preferably in the range of from 1 to 30% by weight of the said final polyisocyanate adhesive. More preferably, the level is from 2 to 25%, still more preferably from 3 to 20%, even more preferably from 4 to 15%, and most preferably from 5 to 12% of the said final (i.e. total) polyisocyanate adhesive composition by weight.

Also, it may sometimes be necessary to utilize additional optional dilutants and/or wetting agents in the final polyisocyanate adhesive composition in order to modify the viscosity of the adhesive composition. These materials are used in amounts appropriate for specific applications, which will be evident to one skilled in the art based on the present disclosure. Alkylene carbonates, such as propylene carbonate, may be particularly useful as an optional additive in some adhesive formulations. This inert and relatively high boiling compound can be useful for improving the stability of the final adhesive composition, with respect to separation. The optional additional additives, if used at all, should preferably be present at low levels.

In a preferred embodiment, the final polyisocyanate adhesives of the invention (including any optional additives) are liquids at 25°C. The viscosity of the final adhesive composition is preferably less than 12,000 cps at 25°C, more preferably less than 10,000 cps, still more preferably less than 7000 cps, even more preferably less than 5000 cps, and most preferably less than 4000 cps at 25°C. Said formulated adhesive compositions are further preferably stable with respect to bulk separation of the particulate filler (where fillers are used), gel formation, and substantial increase in viscosity during storage under dry conditions at 25°C. The viscosity should not increase above usable levels, as indicated above, during storage for at least 24 hours and preferably for more than 24 hours.

In another preferred embodiment, the organic polyisocyanate composition may comprise a finely dispersed crystalline or semicrystalline organic solid material. These crystalline or semicrystalline organic solids, much like the inorganic fillers discussed above, provide the adhesive with gap filling properties which are highly desirable in some applications. However, these fine particulate organic dispersions in the polyisocyanate adhesive can also dramatically improve the bond strength and bond durability of the adhesive glue line. The extent of the improvement is unexpected and surprising, and can aid in the formulation of organic polyisocyanate adhesives that pass all the requirements of ASTM D-2559-00 Section 14 and/or ASTM D-2559-00 Sections 14 and 15 without the need for any optional adhesion promoter. The preferred stand-alone one-component polyisocyanate adhesives according to the invention are storage stable for greater than 24 hours, and generally also for greater than 7 days, under ambient conditions (when protected from moisture). It would, of course, still be within the broader scope of the invention to use these highly preferred stand-alone polyisocyanate adhesives with the optional adhesion promoters. The organic polyisocyanate adhesives of this type may be semi-solid at 25°C, and may require heating in order to facilitate application thereof as liquids. The adhesives under this embodiment may also be applied as semi-solids, which are flowable. The application of a liquid polyisocyanate adhesive to the lignocellulosic substrate(s) is generally the preferred mode of application. However, application of the adhesives as flowable pastes is within the broader scope of the invention, provided that the required properties of the resulting adhesive bond are achieved. The crystalline or semicrystalline dispersed organic phase within this embodiment of preferred polyisocyanate adhesives are capable of forming crystalline or semicrystalline domains at least at 25°C, more preferably up to at least about 30°C, and even more preferably up to at least about 40°C at 1 standard atmosphere pressure (760 mmHg). The crystallinity may disappear however if the adhesive is heated to facilitate application to the substrate, but reappears when the adhesive or its cured reaction product is returned to ambient conditions. Although not wanting to be bound to any theory, it is believed that the crystalline or semicrystalline dispersed organic domains in this embodiment help to diffuse fracture energy, thereby improving the strength and damage tolerance of the adhesive bond. The dispersed organic phase also reduces foaming of the isocyanate adhesive in gaps, thereby increasing the strength of the adhesive bond and reducing the occurrence of defects that might act as sites of stress concentration. The decrease in foaming is particularly noticeable when the crystalline or semicrystalline organic dispersion modified isocyanate adhesive is applied to the substrate in a semi-solid (paste like) state, as opposed to a fully molten state. Application of these adhesives in the paste like state, wherein at least some of the crystalline or semicrystalline domains are intact, is therefore preferred to application in the fully molten state in this particular embodiment of the invention. Non-limiting examples of preferred dispersed phases which have crystalline or semicrystalline character under ambient conditions include high molecular weight polycaprolactone polymer segments, and certain polyethylene powders. It is highly preferred that the particulate crystalline or semicrystalline phases in these polyisocyanate adhesives be finely dispersed and have some degree of direct (preferably covalent) surface bonding to the polyisocyanate. In one non-limiting example of a highly preferred embodiment, a 50,000 MW (number averaged) polycaprolactone diol is melt dispersed into a quasiprepolymer polyisocyanate. The quasiprepolymer polyisocyanates in this embodiment necessarily also contain prepolymer species derived from a tertiary amine initiated polyahl and prepolymer species derived from a hydrocarbon backbone polyahl, as described previously. The terminal hydroxyl groups on the high molecular weight polycaprolactone provide for reaction with free isocyanate groups during the melt dispersion process. The resulting dispersion continues to have free isocyanate groups. The polycaprolactone phase retains some degree of crystallinity at least under ambient conditions. The polycaprolactone prepolymer in this specialized embodiment is an example of an additional (optional) prepolymeric species, within the scope of the invention. In yet another non-limiting example, a surface treated finely powdered polyethylene is used as the dispersed crystalline or semicrystalline organic phase, in a quasiprepolymer polyisocyanate according to the invention. The surface treatment of the powdered polyethylene provides for wetting, and possibly bonding, to the polyisocyanate. Combinations of the high MW polycaprolactone and the surface treated polyethylene powder may also be used, if desired, with good results. The total loading of the optional dispersed crystalline or semicrystalline phase is typically between about 1% and 25% by weight of the total polyisocyanate adhesive composition (including said dispersed phase). More preferably, this loading is from about 3% to about 20% by weight, and most preferably from about 5% to 12% by weight. These dispersions typically have a paste like consistency under ambient conditions but are flowable as pastes and become liquids again when heated.

Combinations of organic and inorganic fillers may be used if desired. However, it is generally preferred to use one or the other. Both types of dispersed phases provide for improved gap filling ability and reduced tendency for foaming of the adhesive during the cure thereof These characteristics are highly desirable.

In any of the various embodiments, the amount of the polyisocyanate adhesive that should be applied to the substrate should be just high enough to assure that the bond is sufficiently strong and durable to pass all the requirements of ASTM D-2559-00 Section 14 and/or ASTM D-2559-00 Sections 14 and 15. Use of higher levels is not economical for many applications, but may nevertheless be justified in certain specialized applications and would be within the scope hereof The optimum amount will depend on the specific type of polyisocyanate adhesive used, on the wood species, and may depend further on the presence and type of any optional adhesion promoters used. The polyisocyanate adhesives that have been modified with a crystalline or semicrystalline organic phase, as described above, generally exhibit improved bond strength and durability as the loading of the polyisocyanate on the substrate is increased. This is believed to be due, at least in part, to the gap filling nature of these adhesives. However, other types of polyisocyanate adhesives within the scope of the invention generally do no exhibit a monotonic increase in bond strength and durability as the adhesive loading is increased.

The typical loading of the polyisocyanate adhesive ranges from about 4 to about 40 pounds per 1000 square feet of bond interface, but, more preferably, from about 8 to about 40 pounds per 1000 square feet of bond interface. These ranges generally apply whether or not an optional adhesion promoter is used.

The expression "bond interface" (or "interface") denotes the area of overlap between the adherends, and not the sum of the areas of the surfaces to be bonded.

The polyisocyanate-based adhesive compositions disclosed herein may be used with an optional surface treatment, although this is generally less desirable. According to this optional mode, the surface of at least one of the substrates to be bonded is treated with an effective amount of an adhesion promoting composition, and preferably both surfaces. The adhesion promoting composition, when used, is desirably a liquid and is most preferably an aqueous solution or an aqueous latex dispersion. The surface of at least one of the substrates to be bonded is treated with an effective amount of a polyisocyanate adhesive composition. The bonding surfaces treated with the surface treatment and with the polyisocyanate composition may be the same or different. The surfaces of the treated substrates to be bonded are brought into direct contact, wherein said polyisocyanate adhesive composition is caused to come into contact with at least a portion of the optional adhesion promoting composition under conditions suitable for the formation of an adhesive bond between said surfaces. An adhesive bond is allowed to form between the surfaces.

The optional adhesion promoting composition, when used, is preferred to be a completely separate entity from the polyisocyanate adhesive composition. These two compositions are preferably applied to the substrate separately.

In the more preferred embodiments, the polyisocyanate composition disclosed herein is applied "neat" (not emulsified or diluted with water), whether or not an optional (and separate) adhesion promoter is used. Although considerably less desirable, it would be within the broader scope of the invention to apply the polyisocyanate adhesive of the invention, in whole or in part, as an aqueous emulsion, provided that there are free isocyanate groups remaining in the adhesive at the time it is cured.

Many different types of optional adhesion promoters may be used if desired. These are discussed, along with their methods of use, in greater detail in the co-pending application, cited previously.

In industrial practice, the surfaces of lignocellulosic adherends are sometimes sprayed with water, in conjunction with the use of polyisocyanate adhesives.

The polyisocyanate adhesive must be applied in an amount effective to produce adhesion between two substrates. It must be applied to at least one of the substrates to be bonded in forming the composite, but may be applied to more than one of the substrates, if desired. It must come into adhesive contact with at least one of the lignocellulosic substrates to be bonded during the formation of the composite. Moreover, it is important that the polyisocyanate adhesive come into adhesive contact with the lignocellulosic substrates to be bonded. Industrially preferred methods of adhesive application include spraying and ribbon coating, but other known methods may be used.

The extent of adhesive coverage of the surfaces to be bonded may be partial or complete. Those skilled in the art will appreciate means for optimizing adhesive usage in preparing the adhesive bond in any given bonding situation.

After the adhesive has been applied to the substrates to be bonded, the surfaces of these substrates are placed into adhesive contact. The formation of the adhesive bond is further promoted by conditions that facilitate the cure of the polyisocyanate adhesive in intimate contact with the bonding surfaces. These conditions generally involve the application of pressure and/or heat to the bonding surfaces. Cold curing is preferred. Cure of the polyisocyanate adhesive is also facilitated by the presence of moisture at the site of adhesive bonding. Lignocellulosic substrates usually contain moisture, and sometimes it is preferred to add additional moisture to one or more of the surfaces to be bonded.

Pressure may be applied by placing the substrates to be bonded in a press, or by using a jig or a clamping means, in order to force the bonding surfaces into more intimate contact. The use of pressure is generally preferred. Heat may optionally also be applied in order to accelerate cure. When heating is applied it is most preferably used in combination with pressure. The application of heat may be accomplished for example by using a heated press, by using an oven, by applying radiation (such as infrared, RF, or microwaves), by injecting steam, by use of a stream of hot air, or by combinations of these methods, and the like.

In an especially preferred embodiment, the formation of the adhesive bond is accomplished at ambient temperature. This preferred "cold curing" mode is accomplished by the combination of pressure and moisture, without external heating. It is a particularly desirable method of curing in engineered lumber applications, such as the formation of thick laminated beams and adhesive bonded I-joists.

Those skilled in the art will appreciate that the details of the curing conditions and the length of time that they must be applied in order to achieve an optimal adhesive bond will vary considerably with the formulation of the polyisocyanate adhesive, the nature of the substrates to be bonded, the type of composite being produced, the level and distribution of the adhesive (and of any optional adhesion promoter used), and many other known factors. Cure conditions for each bonding situation must be optimized independently.

It is within the broader scope of the invention to employ other adhesive components in addition to the required polyisocyanate based adhesive composition. The polyisocyanate based adhesive may, for example, be used in combination with a phenolic resin, an unsaturated polyester resin, an epoxy resin, or any other optional non-isocyanate based co-adhesive system. The optional non-isocyanate based co-adhesive may, if used, be applied to the substrates separately from the polyisocyanate adhesive, or together with the polyisocyanate adhesive if this is technically practical. Co-adhesives, such as those listed above, are not required for the successful practice of the invention and add undesirable complexity to the manufacturing process.

Although also undesirable, it is technically possible to use "two component" adhesives, wherein the polyisocyanate adhesive constituent of the overall adhesive system is brought into reactive contact with a polyfunctional organic isocyanate-reactive composition, such as a polyol blend, during the formation of the adhesive bond. In this two component mode the organic polyisocyanate is mixed with the optional isocyanate-reactive organic material either on the surface of the bonding substrates or during the application process. The combining of the two components is usually done at a well-defined and predetermined ratio of the said components. Reaction between these two components occurs primarily in contact with the surfaces to be bonded. The use of two (or multi) component adhesives is generally undesirable because of the need to carefully control the component ratios, and to keep the components separated until application to the substrate. This adds to the complexity of the adhesive bonding process. The use of two component or multi-component technology is not required for the successful practice of the invention.

In the preferred embodiments, the polyisocyanate adhesive is the sole adhesive resin used. The most preferred polyisocyanate adhesive composition is a "one component" adhesive. Cure of this one component adhesive is facilitated by contact with moisture on the substrate, and by the presence of isocyanate reactive groups naturally present in or on the substrates to be bonded. In the preferred "one component" embodiment there are, with the possible exception of added moisture, no other isocyanate reactive materials introduced.

The invention further provides adhesive bonded articles prepared according to the processes described herein.

It has been surprisingly found that the specific combination of prepolymeric species used in the polyisocyanate adhesive compositions disclosed herein result in a unique combination of rapid cure, thereby facilitating the use of single-component cold cure methods, and significantly improved heat resistance in the glue line.

The following examples are illustrative of the present invention, and are not intended to limit the scope of the invention in any way.

### Examples

Amounts of ingredients shown below are by weight unless otherwise indicated. The expression "#/msf" denotes "pounds per 1000 square feet" of bond interface. The expression "interface" (or "bond interface") denotes bonding interface between two lignocellulosic substrates. The surface area of the interface is equal to the area of overlap between two adherends (i.e. the area over which the two surfaces are in contact), and not the total surface area of the adherends.

### Adhesive Syntheses:

### Materials:

1) Isocyanate A: A polymeric MDI product having a free isocyanate group content of about 31.2% by weight, and viscosity of 180 cP at 25°C.
2) SYNPERONIC® T-304 polyol: A tertiary-amine-containing polyol obtained from the reaction of ethylene oxide and propylene oxide with ethylene diamine (initiator). This product, available from ICI, has a number averaged molecular weight of 1650 and is nominally a tetrol. A very similar product is sold by BASF Corporation under the trade name of TETRONIC® 304 polyol.
3) JEFFCAT® DMDEE catalyst: An inert (non-isocyanate reactive) tertiary amine catalyst (2,2'-dimorpholinodiethylether), available from Huntsman Petrochemical Corporation.
4) PLURACOL®-E 1450 NF polyol: A polyoxyethylene diol available from BASF Corporation. This nominal polyether diol is believed to have a molecular weight (number averaged) of about 1450.
5) PBD R-20LM polyol: A polybutadiene-backbone diol, available from Sartomer Corporation. This nominal hydrocarbon-backbone diol is believed to have a molecular weight (number averaged) of about 1300.

### Syntheses:

Formulation #1 (Comparative): 80 parts by weight of the isocyanate A were mixed with 10 parts by weight SYNPERONIC®T-304 polyol and 10 parts by weight PLURACOL®-E 1450 NF polyol under a blanket of nitrogen. This mixture was then heated for 3 hours at a temperature of approximately 90°C (under dry nitrogen). After cooling 0.6 parts of JEFFCAT® DMDEE catalyst, a non-isocyanate-reactive tertiary amine catalyst (an optional additive), was added.

Formulation #2: 80 parts by weight of the isocyanate A were mixed with 10 parts by weight SYNPERONIC®T-304 polyol and 10 parts by weight PBD R-20LM polyol under a blanket of nitrogen. This mixture was then heated for 3 hours at a temperature of approximately 90°C (under dry nitrogen). After cooling 0.6 parts of JEFFCAT® DMDEE catalyst, a non-isocyanate-reactive tertiary amine catalyst (an optional additive), was added.

### Lignocellulosic composite preparation

Block shear samples were prepared by bonding 5.08 cm (2") x 4.445 cm (1.75") Southern Yellow Pine (SYP) blocks with the aforementioned adhesives. The blocks were humidity conditioned prior to lamination, and were then press laminated as pairs under ambient conditions in replicate sets of 6. Humidity conditioning was accomplished with a Forma Scientific Model 3940 Reach-In Incubator set at 380C and 45% relative humidity. Samples were allowed to equilibrate for a minimum of 48 hours, after which the wood moisture content of the samples was approximately 10% as measured with a Wagner Model L606 handheld moisture meter. Using a 2.54 cm (1") soft nylon bristle paint brush, approximately 0.26 grams of adhesive was applied to one surface of each pair of block assemblies. After applying the adhesive, each pair of blocks was assembled such that only 3.81 cm (1.5") of each block overlapped its pair along the grain direction, resulting in an adhered surface of 19.35 cm² (3.0 square inches). Once assembled, the set of 6 samples was allowed to remain under ambient conditions at atmospheric pressure for an "open-time" of approximately 2 to 10 minutes, and then each set of 6 samples was placed in a Carver Model 2817 hydraulic laboratory press to cure either at room temperature or at 104°C (220°F) with a force adequate to provide a pressure of 1723.7 kPa (250 lbs/in²) for a period of 2 to 6 hours. The geometry of each finished specimen was similar to that described in ASTM Standard D 2559-99. A total of 24 laminated pairs were prepared for each type of adhesive.

### Sample Testing

The samples were tested for shear strength in compression using an MTS Alliance RF/100 Model 4501034 Universal Testing Machine and a shear test fixture. The compression loading was determined at a nominal cross head speed of 0.5 cm (0.2 inches) per minute. An electronic load cell and readout system was implemented for force measurement. The shear specimen's wood grain was tested parallel to the load direction. The specimens were tested under ambient conditions in two states: in the "as-received" state, which was representative of the bond strength prior to high temperature exposure; and in the "exposed" state, where the specimen was exposed to a temperature of 232°C (450°F) for a period of 1 hour before testing. The ratio of the "exposed" bond strength to the "as-received" bond strength was defined as the "% retention" of bond strength. The % retention of each group of adhered specimens was then compared to the average from a group of solid monolithic SYP blocks, fabricated to have the same overall dimensions and grain patterns as the laminated specimens, but without the adhesive bondline. In this way, the durability of the adhesive was compared to the cohesive durability of the wood itself. 10 replicates were tested and averaged for each group of "as-received" and "exposed" sample specimens.

### Results

Table 1 provides the pressing temperature and block shear strength results for SYP laminates that were prepared with adhesive formulations #1 (comparative) and #2, together with comparative block shear strength results for the solid, monolithic SYP specimens (prepared without adhesive).

**Table 1**

| **Adhesive Formulation** | **Press Temp. (°C)** | **Shear Strength "as-received" (kPa)** | **Shear Strength "exposed" (kPa)** | **% retention** |
|---|---|---|---|---|
| Solid SYP Block (no adhesive) | -- | 9860 (1430 psi) | 2551 (370 psi) | 26 |
| #1 | ambient | 10294 (1493 psi) | 993 (144 psi) | 9.6 |
| #2 | ambient | 10266 (1489 psi) | 1882 (273 psi) | 18.3 |

These results show that the formulation disclosed herein (#2) results in higher bond strength retention. Moreover, substitution with the polybutadiene diol (#2) provides an unexpected improvement in high temperature bond durability.

## Claims

1. An adhesive composition for preparing lignocellulosic composites comprising an isocyanate-terminated reaction product of:
(a) a polyisocyanate composition,
(b) a tertiary-amine-containing polyahl, and
(c) a hydrocarbon-backbone polyahl having a number averaged molecular weight of greater than 400;
wherein the adhesive composition contains free organically bound isocyanate groups; and
wherein the hydrocarbon-backbone polyahl comprises a polyalkadiene polyol and the tertiary-amine-containing polyahl comprises an aliphatic amine initiated polyol.

2. The adhesive composition of claim 1, wherein the polyisocyanate composition comprises a polymethylene polyphenyl polyisocyanate.

3. The adhesive composition of claim 1, wherein the tertiary-amine-containing polyahl comprises a tertiary-amine-containing alkanolamine polyol.

4. The adhesive composition of claim 1, wherein the hydrocarbon-backbone polyahl comprises a hydrocarbon-backbone polyol having a number averaged molecular weight from 600 to 8000.

5. The adhesive composition of claim 1, wherein the polyalkadiene polyol is selected from the group consisting of polybutadiene polyols, polyisoprene polyols, polybutadiene-polyisoprene copolymer polyols, and mixtures thereof.

6. The adhesive composition of claim 3, wherein the tertiary-amine-containing alkanolamine polyol is a polyether polyol containing both oxyethylene and oxypropylene units.

7. An adhesive composition for preparing lignocellulosic composites comprising an isocyanate-terminated reaction product of:
(a) a polymethylene polyphenyl polyisocyanate,
(b) a tertiary-amine-containing alkanolamine polyol, and
(c) a hydrocarbon-backbone polyol having a number averaged molecular weight from 600 to 8000;
wherein the adhesive composition contains free organically bound isocyanate groups; and
wherein the hydrocarbon-backbone polyol comprises a polyalkadiene polyol and the tertiary-amine-containing alkanolamine polyol comprises an aliphatic amine initiated polyol.

8. The adhesive composition of claim 7, wherein the polyalkadiene polyol is selected from the group consisting of polybutadiene polyols, polyisoprene polyols, polybutadiene-polyisoprene copolymer polyols, and mixtures thereof.

9. The adhesive composition of claim 7, wherein the tertiary-amine-containing alkanolamine polyol is a polyether polyol containing both oxyethylene and oxypropylene units.

10. A process for preparing a bonded article from lignocellulosic substrates using a single adhesive system, the process comprising the steps of:
a. providing at least two lignocellulosic surfaces for bonding,
b. providing a adhesive composition,
c. applying the adhesive composition to at least a portion of at least one of the lignocellulosic surfaces for bonding,
d. contacting the lignocellulosic surfaces under conditions suitable for forming an adhesive bond between the lignocellulosic surfaces, and
e. recovering an adhesive bonded lignocellulosic article;
wherein the adhesive composition comprises an isocyanate-terminated reaction product of:
(i) a polyisocyanate composition,
(ii) a tertiary-amine-containing polyahl, and
(iii) a hydrocarbon-backbone polyahl having a number averaged molecular weight of greater than 400;
wherein the adhesive composition contains free organically bound isocyanate groups; and
wherein the hydrocarbon-backbone polyol comprises a polyalkadiene polyol and the tertiary-amine-containing polyahl comprises an aliphatic amine initiated polyol.

11. The process of claim 10, wherein the polyisocyanate composition comprises a polymethylene polyphenyl polyisocyanate.

12. The process of claim 10, wherein the tertiary-amine-containing polyahl comprises a tertiary-amine-containing alkanolamine polyol.

13. The process of claim 10, wherein the hydrocarbon-backbone polyahl comprises a hydrocarbon-backbone polyol having a number averaged molecular weight from 600 to 8000.

14. The process of claim 10, wherein the polyalkadiene polyol is selected from the group consisting of polybutadiene polyols, polyisoprene polyols, polybutadiene-polyisoprene copolymer polyols, and mixtures thereof.

15. The process of claim 12, wherein the tertiary-amine-containing alkanolamine polyol is a polyether polyol containing both oxyethylene and oxypropylene units.

16. A lignocellulosic composite prepared using the adhesive according to claim 1.

17. A bonded lignocellulosic article prepared according to the process of claim 10.

## Patentansprüche

1. Klebstoff-Zusammensetzung zur Herstellung von Lignocellulose-Verbundstoffen, umfassend ein Isocyanat-terminiertes Reaktionsprodukt:
(a) einer Polyisocyanat-Zusammensetzung,
(b) eines tertiären Amin-enthaltenden Polyahls und
(c) eines Kohlenwasserstoff-Hauptketten-Polyahls, das ein zahlenmittleres Molekulargewicht von größer als 400 hat;
wobei die Klebstoff-Zusammensetzung freie organisch gebundene Isocyanatgruppen enthält, und
wobei das Kohlenwasserstoff-Hauptketten-Polyahl ein Polyalkadienpolyol umfasst und das tertiäres Amin-enthaltende Polyahl ein aliphatisches Amin-initiiertes Polyol umfasst.

2. Klebstoff-Zusammensetzung gemäß Anspruch 1, wobei die Polyisocyanat-Zusammensetzung ein Polymethylen-Polyphenyl-Polyisocyanat umfasst.

3. Klebstoff-Zusammensetzung gemäß Anspruch 1, wobei das tertiäres Amin-enthaltende Polyahl ein tertiäres Amin-enthaltendes Alkanolaminpolyol umfasst.

4. Klebstoff-Zusammensetzung gemäß Anspruch 1, wobei das Kohlenwasserstoff-Hauptketten-Polyahl ein Kohlenwasserstoff-Hauptketten-Polyol, das ein zahlenmittleres Molekulargewicht von 600 bis 8 000 hat, umfasst.

5. Klebstoff-Zusammensetzung gemäß Anspruch 1, wobei das Polyalkadienpolyol aus der Gruppe, bestehend aus Polybutadienpolyolen, Polyisoprenpolyolen, Polybutadien-Polyisopren-Copolymerpolyolen und Gemischen davon, ausgewählt ist.

6. Klebstoff-Zusammensetzung gemäß Anspruch 3, wobei das tertiäres Amin-enthaltende Alkanolaminpolyol ein Polyetherpolyol ist, das sowohl Oxyethylen- als auch Oxypropylen-Einheiten enthält.

7. Klebstoff-Zusammensetzung zur Herstellung von Lignocellulose-Verbundstoffen, umfassend ein Isocyanat-terminiertes Reaktionsprodukt:
(a) eines Polymethylen-Polyphenyl-Polyisocyanats,
(b) eines tertiäres Amin-enthaltenden Alkanolaminpolyols und
(c) eines Kohlenwasserstoff-Hauptketten-Polyols, das ein zahlenmittleres Molekulargewicht von 600 bis 8000 hat;
wobei die Klebstoff-Zusammensetzung freie organisch gebundene Isocyanatgruppen enthält und
wobei das Kohlenwasserstoff-Hauptketten-Polyol ein Polyalkadienpolyol umfasst und das tertiäres Amin-enthaltende Alkanolaminpolyol ein aliphatisches Amin-initiiertes Polyol umfasst.

8. Klebstoff-Zusammensetzung gemäß Anspruch 7, wobei das Polyalkadienpolyol aus der Gruppe, bestehend aus Polybutadienpolyolen, Polyisoprenpolyolen, Polybutadien-Polyisopren-Copolymerpolyolen und Gemischen davon, ausgewählt ist.

9. Klebstoff-Zusammensetzung gemäß Anspruch 7, wobei das tertiäres Amin-enthaltende Alkanolaminpolyol ein Polyetherpolyol ist, das sowohl Oxyethylen- als auch Oxypropylen-Einheiten enthält.

10. Verfahren zur Herstellung eines verklebten Gegenstandes aus Lignocellulose-Substraten unter Verwendung eines einzelnen Klebstoffsystems, wobei das Verfahren die Schritte umfasst:
a. Bereitstellen von wenigstens zwei Lignocelluloseoberflächen zum Kleben,
b. Bereitstellen einer Klebstoff-Zusammensetzung,
c. Auftragen der Klebstoff-Zusammensetzung auf wenigstens einen Teil wenigstens einer der Lignocellulose-Oberflächen zum Kleben,
d. In-Kontakt-Bringen der Lignocellulose-Oberflächen unter Bedingungen, die zur Bildung einer Klebebindung zwischen den Lignocellulose-Oberflächen geeignet sind, und
e. Gewinnen eines durch Klebstoff verklebten Lignocellulose-Gegenstands;
wobei die Klebstoff-Zusammensetzung ein Isocyanat-terminiertes Reaktionsprodukt von:
(i) einer Polyisocyanat-Zusammensetzung,
(ii) einem tertiären Amin-enthaltenden Polyahl und
(iii) einem Kohlenwasserstoff-Hauptketten-Polyahl, das ein zahlenmittleres Molekulargewicht von größer als 400 hat, umfasst;
wobei die Klebstoff-Zusammensetzung freie organisch gebundene Isocyanatgruppen enthält und
wobei das Kohlenwasserstoff-Hauptketten-Polyol ein Polyalkadienpolyol umfasst und das tertiäres Amin-enthaltende Polyahl ein aliphatisches Amin-initiiertes Polyol umfasst.

11. Verfahren gemäß Anspruch 10, wobei die Polyisocyanat-Zusammensetzung ein Polymethylen-Polyphenyl-Polyisocyanat umfasst.

12. Verfahren gemäß Anspruch 10, wobei das tertiäres Amin enthaltende Polyahl ein tertiäres Amin enthaltendes Alkanolaminpolyol umfasst.

13. Verfahren gemäß Anspruch 10, wobei das Kohlenwasserstoff-Hauptketten-Polyahl ein Kohlenwasserstoff-Hauptketten-Polyol umfasst, das ein zahlenmittleres Molekulargewicht von 600 bis 8 000 hat.

14. Verfahren gemäß Anspruch 10, wobei das Polyalkadienpolyol aus der Gruppe, bestehend aus Polybutadienpolyolen, Polyisoprenpolyolen, Polybutadien-Polyisopren-Copolymerpolyolen und Gemischen davon, ausgewählt wird.

15. Verfahren gemäß Anspruch 12, wobei das tertiäres Amin enthaltende Alkanolaminpolyol ein Polyetherpolyol ist, das sowohl Oxyethylen- als auch Oxypropylen-Einheiten enthält.

16. Lignocellulose-Verbundstoff, der unter Verwendung des Klebstoffs gemäß Anspruch 1 hergestellt ist.

17. Verklebter Lignocellulose-Gegenstand, der gemäß dem Verfahren von Anspruch 10 hergestellt ist.

## Revendications

1. Composition d'adhésif pour préparer des composites lignocellulosiques, comprenant un produit de réaction, à terminaison isocyanate :
(a) d'une composition de polyisocyanate,
(b) d'un polyahl à fonction amine tertiaire, et
(c) d'un polyahl à squelette hydrocarboné ayant une moyenne en nombre du poids moléculaire supérieure à 400 ;
ladite composition d'adhésif contenant des groupes isocyanate à liaison organique libres ; et
dans laquelle le polyahl à squelette hydrocarboné comprend un polyalkadiène-polyol et le polyahl à fonction amine tertiaire comprend un polyol à initiation amine aliphatique.

2. Composition d'adhésif suivant la revendication 1, dans laquelle la composition de polyisocyanate comprend un polyméthylène-polyphényl-polyisocyanate.

3. Composition d'adhésif suivant la revendication 1, dans laquelle le polyahl à fonction amine tertiaire comprend un alcanolamine-polyol à fonction amine tertiaire.

4. Composition d'adhésif suivant la revendication 1, dans laquelle le polyahl à squelette hydrocarboné comprend un polyol à squelette hydrocarboné ayant une moyenne en nombre du poids moléculaire de 600 à 8000.

5. Composition d'adhésif suivant la revendication 1, dans laquelle le polyalkadiène-polyol est choisi dans le groupe consistant en des polybutadiène-polyols, des polyisoprène-polyols, des polyols copolymères de polybutadiène-polyisoprène et leurs mélanges.

6. Composition d'adhésif suivant la revendication 3, dans laquelle l'alcanolamine-polyol à fonction amine tertiaire est un polyéther-polyol contenant à la fois des motifs oxyéthylène et des motifs oxypropylène.

7. Composition d'adhésif pour préparer des composites lignocellulosiques, comprenant un produit de réaction, à terminaison isocyanate :
(a) d'un polyméthylène-polyphényl-polyisocyanate,
(b) d'un alcanolamine-polyol à fonction amine tertiaire, et
(c) d'un polyol à squelette hydrocarboné ayant une moyenne en nombre du poids moléculaire de 600 à 8000 ;
ladite composition d'adhésif contenant des groupes isocyanate à liaison organique libres ; et
dans laquelle le polyol à squelette hydrocarboné comprend un polyalkadiène-polyol et l'alcanolamine-polyol à fonction amine tertiaire comprend un polyol à initiation amine aliphatique.

8. Composition d'adhésif suivant la revendication 7, dans laquelle le polyalkadiène-polyol est choisi dans le groupe consistant en des polybutadiène-polyols, des polyisoprène-polyols, des polyols copolymères de polybutadiène-polyisoprène et leurs mélanges.

9. Composition d'adhésif suivant la revendication 7, dans laquelle l'alcanolamine-polyol à fonction amine tertiaire est un polyéther-polyol contenant à la fois des motifs oxyéthylène et des motifs oxypropylène.

10. Procédé pour préparer un article lié à partir de substrats lignocellulosiques en utilisant un système d'adhésif unique, le procédé comprenant les étapes consistant à :
a. fournir au moins deux surfaces lignocellulosiques pour la liaison,
b. fournir une composition d'adhésif,
c. appliquer la composition d'adhésif à au moins une partie d'au moins une des surfaces lignocellulosiques pour la liaison,
d. mettre en contact les surfaces lignocellulosiques dans des conditions convenables pour former une liaison adhésive entre les surfaces lignocellulosiques, et
e. recueillir un article lignocellulosique lié par liaison adhésive ;
dans lequel la composition d'adhésif comprend un produit de réaction à terminaison isocyanate :
(i) d'une composition de polyisocyanate,
(ii) d'un polyahl à fonction amine tertiaire, et
(iii) d'un polyahl à squelette hydrocarboné ayant une moyenne en nombre du poids moléculaire supérieure à 400 ;
dans lequel la composition d'adhésif contient des groupes isocyanate à liaison organique libres ; et
dans lequel le polyol à squelette hydrocarboné comprend un polyalkadiène-polyol et le polyahl à fonction amine tertiaire comprend un polyol à initiation amine aliphatique.

11. Procédé suivant la revendication 10, dans lequel la composition de polyisocyanate comprend un polyméthylène-polyphényl-polyisocyanate.

12. Procédé suivant la revendication 10, dans lequel le polyahl à fonction amine tertiaire comprend un alcanolamine-polyol à fonction amine tertiaire.

13. Procédé suivant la revendication 10, dans lequel le polyahl à squelette hydrocarboné comprend un polyol à squelette hydrocarboné ayant une moyenne en nombre du poids moléculaire de 600 à 8000.

14. Procédé suivant la revendication 10, dans lequel le polyalkadiène-polyol est choisi dans le groupe consistant en des polybutadiène-polyols, des polyisoprène-polyols, des polyols copolymères de polybutadiène-polyisoprène et leurs mélanges.

15. Procédé suivant la revendication 12, dans lequel l'alcanolamine-polyol à fonction amine tertiaire est un polyéther-polyol contenant à la fois des motifs oxyéthylène et des motifs oxypropylène.

16. Composite lignocellulosique préparé en utilisant l'adhésif suivant la revendication 1.

17. Article lignocellulosique lié préparé par le procédé de la revendication 10.
